# EUROPÄISCHE PATENTSCHRIFT

(11) **EP 0 683 192 B1**
(45) Veröffentlichungstag und Bekanntmachung des Hinweises auf die Patenterteilung: **26.11.2003**
(21) Anmeldenummer: 95106923.6
(22) Anmeldetag: 08.05.1995
(51) Int. Cl.: C08G 64/14

(54) **Durch ihre Endgruppen UV-stabilisierte aromatische Polycarbonate**
By their end groups UV-stabilized aromatic polycarbonates
Polycarbonates aromatiques stabilisés aux rayons-UV par leurs groupes terminaux

(30) Priorität: 20.05.1994 DE 4417748
(43) Veröffentlichungstag der Anmeldung: 22.11.1995
(73) Patentinhaber: BAYER AG, 51368 Leverkusen (DE)
(72) Erfinder: Scholl, Thomas, Dr., D-51469 Bergisch Gladbach (DE); Bier, Peter, Dr., D-47800 Krefeld (DE)

(56) Entgegenhaltungen:
- EP-A- 0 057 160
- EP-A- 0 338 355
- EP-A- 0 575 177
- FR-A- 2 215 440
- US-A- 3 214 436
- CHEMICAL ABSTRACTS, vol. 121, no. 26, 26. Dezember 1994, Columbus, Ohio, US; abstract no. 301651, & JP-A-6 107 779 (MITSUBISHI GAS CHEMICAL CO.) 19. April 1994
- CHEMICAL ABSTRACTS, vol. 122, no. 4, 23. Januar 1995, Columbus, Ohio, US; abstract no. 32910, & JP-A-6 107 805 (TAKIRON CO.) 19. April 1994
- PATENT ABSTRACTS OF JAPAN vol. 16, no. 148 (C-0928) 13. April 1992 & JP-A-04 005 291 (KURARAY CO. LTD.) 9. Januar 1992
- CHEMICAL ABSTRACTS, vol. 120, no. 10, 7. März 1994, Columbus, Ohio, US; abstract no. 108473, & GOSEI JUSHI, Bd.39, Nr.2, 1993, JAPAN Seiten 50 - 55 S. KANAYAMA ET AL.
- CHEMICAL ABSTRACTS, vol. 121, no. 18, 31. Oktober 1994, Columbus, Ohio, US; abstract no. 206324, & JP-A-6 145 330 (IDEMITSU PETROCHEMICAL CO.) 24. Mai 1994

## Beschreibung

Gegenstand der vorliegenden Erfindung ist ein Verfahren zur Herstellung von aromatischen Polycarbonaten mit UV-Absorberendgruppen und mit mittleren Molekulargewichten w (Gewichtsmittel, ermittelt durch Lichtstreuung) zwischen 1 500 und 150 000, gegebenenfalls im Gemisch mit bekannten aromatischen Polycarbonaten mit w (Gewichtsmittel, ermittelt durch Lichtstreuung) zwischen 1 500 und 150 000, aus Diphenolen, 0,001 Mol bis 1 Mol, vorzugsweise 0,01 Mol bis 0,5 Mol, pro Mol Diphenol, Kettenabbrecher, Kohlensäurespender und gegebenenfalls Verzweiger nach den bekannten Polycarbonatherstellungsmethoden des Phasengrenzflächenverfahrens, des Verfahrens in homogener Lösung, (dem sogenannten Pyridinverfahren) oder des Umesterungsverfahrens in der Schmelze, das dadurch gekennzeichnet ist, dass man Kettenabbrecher der Formel (I) 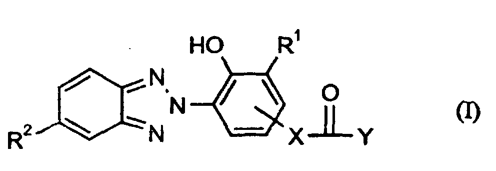 worin
- R¹: H, C₁-C₁₈-Alkyl, C₃-C₆-Cycloalkyl und C₆-C₁₀-Aryl bedeutet,
- R²: H, Cl und C₁-C₁₂-Alkyl bedeutet,
- X: eine Einfachbindung, C₁-C₁₂-Alkylen, C₅-C₆-Cycloalkylen und C₆-C₁₀-Arylen bedeutet und
- Y: ein unter den Reaktionsbedingungen der Polycarbonatherstellungsverfahren reaktiver Rest ist,
gegebenenfalls in Kombination mit anderen bekannten Kettenabbrechern schon bei der Synthese des Polycarbonats verwendet.

Im Falle des Phasengrenzflächenverfahrens ist Y OH, Cl, O-(Alkali), O-Ammonium oder O-1/2 (Erdalkali), d.h. (I) wird also als Carbonsäure, als Carbonsäurechlorid, als Carbonsäure-Alkalisalz, als Carbonium-Ammoniumsalz oder als Carbonsäure-Erdalkalisalz eingesetzt.

Im Falle des Pyridinverfahrens hat Y die gleiche Bedeutung wie vorstehend für das Phasengrenzflächenverfahren.

Im Falle des Umesterungsverfahrens in der Schmelze hat Y ebenfalls die gleiche Bedeutung wie vorstehend für das Phasengrenzflächenverfahren und zusätzlich die Bedeutung von -O-C₆-C₁₀-Aryl, und von C₁-C₆-Alkyl-substituiertem -O-C₆-C₁₀-Aryl.

Die Kettenabbrecher der Formeln (I) und (II) sind entweder literaturbekannt oder nach literaturbekannten Verfahren erhältlich, beispielsweise gemäß dem folgenden Reaktionsschema:

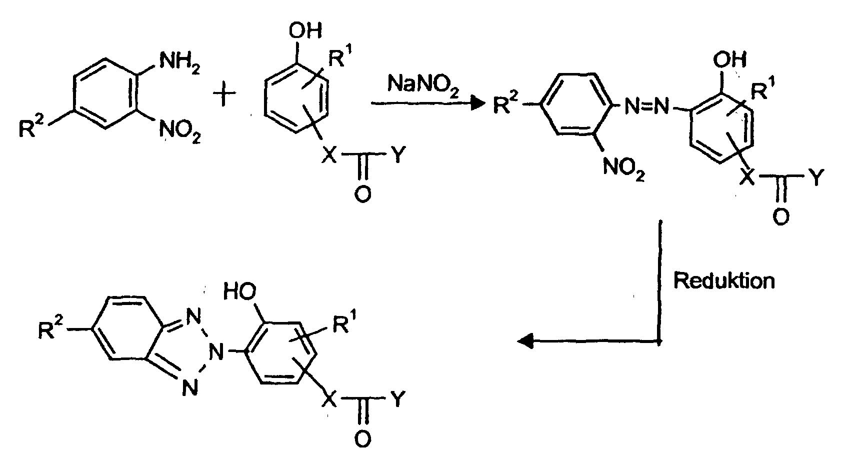

Siehe hierzu beispielsweise EP-B- 0 057 160, Seite 7.

Bevorzugte Verbindungen der Formel (I) sind bespielsweise

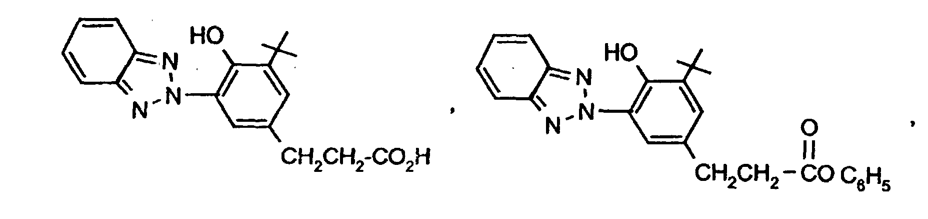

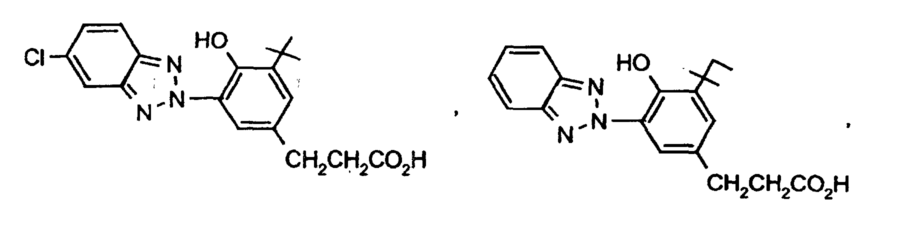

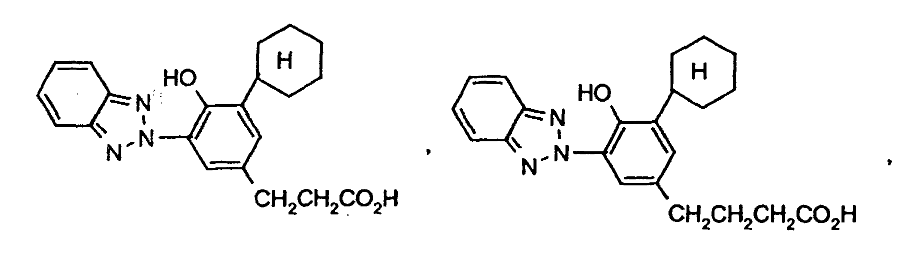

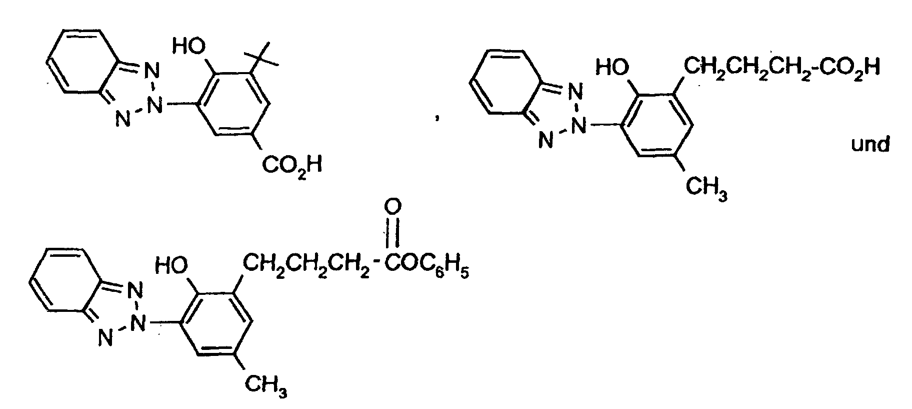

Bekannte, bei dem erfindungsgemäßen Verfahren mitzuverwendende andere Kettenabbrecher sind beispielsweise Phenole, Carbonsäurehalogenide, Sulfonsäurechloride oder Chlorkohlensäureester.

Beispiele für die bekannten, mitzuverwendenden Kettenabbrecher sind Phenol, p-tert.-Butylphenol, 2,6-Dimethylphenol, p-Isooctylphenol, Acetylchlorid und Benzoylchlorid.

Erfindungsgemäß erhältliche aromatische Polycarbonate mit mittleren Molekulargewichten w (Gewichtsmittel ermittelt durch Lichtstreuung) zwischen 1 500 und 150 000 sind vorzugsweise solche der Formel (IV) 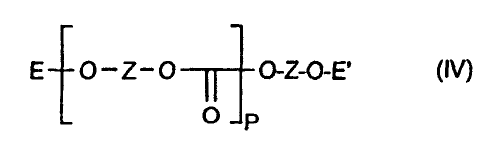 worin
- -O-Z-O-: ein Diphenolatrest mit 6 bis 30 C-Atomen ist,
- E und E': gleich oder verschieden sind und wobei mindestens einer der Reste E und E' einem Rest der Formel (Ia) 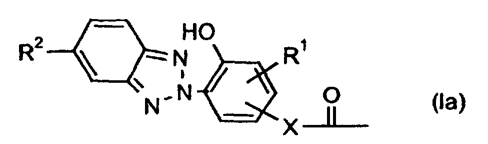
entspricht, worin R¹, R² und X die für Formel (I) genannte Bedeutung haben,
und wobei die übrigen Endgruppen E und E' aus der Reaktion mit den anderen, bekannten Kettenabbrechern, gegebenenfalls unter Einbeziehung von Phosgen resultieren und wobei "p" der Polymerisationsgrad ist, der aus den Molekulargewichten w von 1 500 bis 150 000 resultiert.

Die Gewichtsanteile der Endgruppen der Formel (Ia) in den erfindungsgemäß erhältlichen Polycarbonaten beziehungsweise Polycarbonatgemischen liegen zwischen 40 Gew.-% und 0,1 Gew.-%, vorzugsweise zwischen 0,2 Gew.-% und 10 Gew.-%.

Die erfindungsgemäß erhältlichen Polycarbonate beziehungsweise Polycarbonatgemische haben eine gute Resistenz gegen die Einwirkung von UV-Strahlung; sie sind somit beispielsweise zur Herstellung von Lampenabdeckungen sowie in Form von Platten für Bedachungen insbesondere bei Außenanwendungen, beispielsweise für Gewächshäuser gut geeignet.

Die DE-OS 3 903 487 beschreibt Polycarbonate, bei denen spezielle Phthalimidsubstituierte Hydroxyphenylbenztriazole als Kettenabbrecher verwendet werden. Die hier als Kettenabbrecher verwendeten Verbindungen tragen im Gegensatz zu den Verbindungen der vorliegenden Anmeldung außer der phenolischen Hydroxylgruppe keine weitere einbaufähige Funktion. Somit wird diese in das Polycarbonatmolekül eingebaut. Demgegenüber wird die phenolische Hydroxylgruppe der Kettenabbrecher (I) gemäß dem erfindungsgemäßen Verfahren nicht in das Polycarbonatmolekül eingebaut.

Gemäß der japanischen Patent-Publikation 04-05291 vom 9.1.1992 werden Benztriazole der folgenden Formel 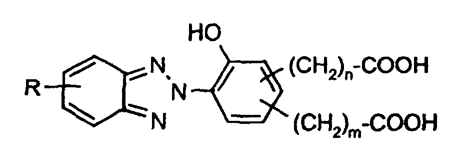 worin
- R: H, Halogen, niedriges Alkyl oder Alkoxy ist und ein Index "n" oder "m" 0 bis 16 und der andere jeweils 2 bis 16 ist,
in Polymere einkondensiert, beispielsweise in Polyethylenterephthalate. Die Benztriazole sind chemisch eingebaut und lassen sich daraus nicht mit Lösungsmitteln extrahieren.

Demgegenüber fungieren die erfindungsgemäß einzusetzenden Benztriazole als Kettenabbrecher bei der Polycarbonatsynthese.

EP 57.160 beschreibt u.a. den Einbau einer Benztriazolcarbonsäure in ein Alkydharz: In einem Polyestersystem aus aliphatischen Monomerbausteinen, wie einem Alkydharz, ist der Einsatz eines weiteren monofunktionellen aliphatischen Bausteins, wie die Benztriazolcarbonsäure in Anwendungsbeispiel IV/Seite 27-31 keine Besonderheit. In einem System aus aromatischen Diolen, wie die Bisphenole der vorliegenden Erfindung, ist die Mitverwendung einer aliphatischen Benztriazolcarbonsäure neu und nicht offensichtlich, da bekannt ist, dass aromatische OH-Gruppen erheblich schlechter zu verestern sind als aliphatische. Bei den hier anzuwendenden schärferen Reaktionsbedingungen ist es überraschend, dass die Hydroxylgruppe am Benztriazol nicht einkondensiert wird, wohl aber die Carboxylgruppe.

Die JP-A 6 107 805 offenbart Polycarbonate mit UV-absorbierenden Endgruppen, die durch nachträgliche Umesterung von Polycarbonat mit UV-Absorbern hergestellt werden, die eine Carboxyl,- Hydroxyl-, Amino- oder Esterfunktionen tragen. Die nach diesem Verfahren erhaltenen Polycarbonate mit UV-absorbierenden Endgruppen weisen den Nachteil auf, dass sie einen erhöhten Gehalt an freien phenolischen OH-Endgruppen tragen. Dies wird durch die Reaktion der Carboxyl-, Hydroxy-, Amino-Esterfunktionen des UV-Absorbers mit der Carbonatgruppe des Polymeren verursacht. Des Weiteren weist das genannte Verfahren gemäß JP-A 6 107 805 den Nachteil auf, dass die mittlere molare Masse des verwendeten Polycarbonates bei der Herstellung des Polycarbonates mit UV-absorbierenden Endgruppen abgebaut wird. Im Unterschied zu dieser Anmeldung werden im vorliegend beanspruchten Verfahren die UV-Absorber bereits während der Polycarbonatherstellung als Kettenabbrecher mit eingebaut.

JP-A 6 107 779 offenbart Copolycarbonate aus dimeren Hydroxyphenylbenztriazolen und weiteren Bisphenolen. Es handelt sich also nicht um mit UV-absorbierenden Endgruppen modifizierte Polycarbonate, wie dies gemäß der vorliegenden Erfindung der Fall ist. Die gemäß JP-A 6 107 779 erhaltenen Copolycarbonate sind dadurch gekennzeichnet, dass die Hydroxygruppe des dimeren Hydroxyphenylbenztriazols bei der Polymerisation abreagiert. Dadurch verliert die Benztriazolfunktion einen großen Teil ihrer Lichtschutzwirkung. Die erfindungsgemäßen Polycarbonate mit UV-absorbierenden Endgruppen besitzen demgegenüber freie Hydroxphenylbenztriazolfunktionen und weisen demgemäß eine bessere UV-Beständigkeit auf.

EP-A 338 355 beschreibt verschmutzungsbeständige Polycarbonatplatten, die einen Überzug aufweisen, welcher UV-absorbierende Substanzen enthält. Es handelt sich dabei um niedermolekulare UV-Absorber, die nicht an Polycarbonatmoleküle gebunden sind.

Bevorzugte Kohlensäurespender sind im Falle des Phasengrenzflächenverfahrens und des Verfahrens in homogener Lösung COCl₂, im Falle des Schmelzumesterungsverfahrens Diphenylcarbonat.

Für die Herstellung der erfindungsgemäßen Polycarbonate geeignete Diphenole der Formel (V)

HO-Z-OH (V)

mit vorzugsweise 6 bis 30 C-Atomen sind sowohl einkernige, als auch mehrkemige Diphenole, die Heteroatome enthalten können und unter den Bedingungen der Polycarbonatherstellung und deren thermischer Behandlung inerte Substituenten haben können.

Beispielsweise seien Hydrochinon, Resorcin, Dihydroxydiphenyl, Bis-(hydroxyphenyl)-alkane, Bis-(hydroxyphenyl)-cycloalkane, Bis-(hydroxyphenyl)-sulfide, -ether, - ketone, -sulfoxide, -sulfone und α,α-Bis-(hydroxyphenyl)-diisopropylbenzole sowie deren kernalkylierte und kernhalogenierte Verbindungen genannt.

Geeignete Diphenole sind beispielsweise in den US-Patenten 3 028 365, 2 999 835, 3 062 781, 3 148 172 und 4 982 014, in den deutschen Offenlegungsschriften 1 570 703 und 2 063 050 sowie in der Monographie "H. Schnell, Chemistry and Physics of Polycarbonates, Interscience Publishers, New York, 1964" beschrieben.

Bevorzugte Diphenole sind
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropyl-benzol,
1,1-Bis-(4-hydroxyphenyl)-3,3,5-trimethylcyclohexan,
1,1-Bis-(4-hydroxyphenyl)-3-methylcyclohexan,
1,1-Bis-(4-hydroxyphenyl)-3,3-dimethylcyclohexan,
1,1-Bis-(4-hydroxyphenyl)-4-methyl-cyclohexan,
2,2-Bis-(3,5-dichlor-4-hydroxyphenyl)-propan und
2,2-Bis-(3,5-dibrom-4-hydroxyphenyl)-propan.

Besonders bevorzugte Diphenole sind z.B.:
2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan.

1,1-Bis-(4-hydroxyphenyl)-3,3,5-trimethylcyclohexan,
1,1-Bis-(4-hydroxyphenyl)-3-methylcyclohexan,
1,1-Bis-(3,5-dimethyl-4-hydroxyphenyl)-4-methylcyclohexan.

Insbesondere ist 2,2-Bis-(4-hydroxyphenyl)-propan und 1,1-Bis-(4-hydroxyphenyl)-3,3,5-trimethylcyclohexan bevorzugt.

Es können auch beliebige Mischungen der vorgenannten Diphenole verwendet werden.

Zwecks Verbesserung des Fließverhaltens können auch geringe Mengen, vorzugsweise Mengen zwischen 0,05 und 2,0 Mol-% (bezogen auf Mole an eingesetzten Diphenolen), an tri- oder mehr als trifunktionellen Verbindungen, insbesondere solchen mit drei oder mehr als drei phenolischen Hydroxylgruppen in bekannter Weise mitverwendet werden. Einige der verwendbaren Verbindungen mit drei oder mehr als drei phenolischen Hydroxylgruppen sind beispielsweise 1,3,5-Tri-(4-hydroxyphenyl)-benzol, 1,1,1-Tri-(4-hydroxyphenyl)-ethan, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenylisopropyl)-phenyl)-ortho-terephthalsäureester, Tetra-(4-hydroxyphenyl)-methan und 1,4-Bis-(4',4"-dihydroxytriphenyl)-methyl)-benzol. Einige der sonstigen dreifunktionellen Verbindungen sind 2,4-Dihydroxybenzoesäure, Trimesinsäure, Cyanurchlorid und 3,3-Bis-(4-hydroxy-3-methyl-phenyl)-2-oxo-2,3-dihydroindol.

Die Herstellung der erfindungsgemäß erhältlichen Polycarbonate beziehungsweise Polycarbonatgemische nach den Lösungsverfahren (vgl. H. Schnell, "Chemistry and Physics of Polycarbonates", Polymer Review, Vol. IX, Seite 27 ff., Interscience Publ. 1964) läßt sich wie folgt erläutern:
1. Lösungsverfahren in disperser Phase (sogenanntes ZweiphasengrenzflächenVerfahren):
   Hierbei werden die einzusetzenden Diphenole in wäßriger alkalischer Phase gelöst. Dazu werden die zur Herstellung der erfindungsgemäßen Polycarbonate erforderlichen Kettenabbrecher in Mengen von 0,01 Mol bis 1 Mol, pro Mol Diphenol, in einem organischen Lösungsmittel gelöst oder in Substanz, zugegeben. Dann wird in Gegenwart einer inerten, vorzugsweise Polycarbonatlösenden, organischen Phase mit Phosgen umgesetzt. Die Reaktionstemperatur liegt zwischen 0°C und 40°C.
   Die Zugabe der erforderlichen Kettenabbrecher in Art und Menge wie oben angegeben, kann auch während der Phosgenierung erfolgen.
   Geeignete organische Lösungsmittel für die Kettenabbrecher sind beispielsweise Methylenchlorid, Chlorbenzol, Mischungen aus Methylenchlorid und Chlorbenzol, Aceton, Acetonitril, Toluol.
   Die Reaktion kann durch Katalysatoren wie Tributylamin oder Triethylamin begünstigt werden. Um den Einbau des Kettenabbrechers zu begünstigen, können auch Oniumsalze, wie etwa Tetraalkylammoniumhalogenide als Phasentransferkatalysatoren mitverwendet werden.
   Werden Verzweiger mitverwendet, so kann deren Zugabe vor der Umsetzung mit Phosgen oder während der Phosgenierung erfolgen.
   Neben oder anstelle der Diphenole können auch deren Chlorkohlensäureester eingesetzt werden.
2. Lösungsverfahren in homogener Phase (auch Pyridin-Verfahren genannt):
   Hierbei werden die Diphenole in organischen Basen wie Pyridin gelöst, gegebenenfalls unter Zusatz weiterer organischer Lösungsmittel; dann werden, wie unter 1. beschrieben, die zur Herstellung der erfindungsgemäßen Polycarbonate erforderlichen Kettenabbrecher in Mengen von 0,01 Mol bis 1 Mol, bezogen auf 1 Mol Diphenol, bei Raumtemperatur zugegeben.
   Dann wird mit Phosgen umgesetzt. Die Reaktionstemperatur liegt zwischen 0°C und 40°C. Geeignete organische Basen außer Pyridin sind z.B. Triethylamin, Tributylamin; geeignete Lösungsmittel sind beispielsweise Methylenchlorid, Chlorbenzol, Toluol oder Gemische aus Methylenchlorid und Chlorbenzol oder Toluol.
   Die Isolierung der erfindungsgemäßen Polycarbonate erfolgt bei den Verfahrensvarianten 1 und 2 in bekannter Weise. Geeignete Aufarbeitungsverfahren sind insbesondere das Ausfällen, die Sprühtrocknung und das Verdampfen des Lösungsmittels im Vakuum.
   Bei der Mitverwendung von Verzweigem wird wie unter 1. beschrieben verfahren.
   Neben den Diphenolen können auch bis zu 50 Mol-%, bezogen auf die eingesetzten Diphenole, von deren Bischlorkohlensäureestern eingesetzt werden.

Die Herstellung der erfindungsgemäßen Polycarbonate beziehungsweise Polycarbonatgemische nach dem Schmelzumesterungsverfahren kann beispielsweise wie folgt durchgeführt werden:

Diphenole, Kettenabbrecher, Diphenylcarbonat und gegebenenfalls Verzweiger werden aufgeschmolzen und gemischt und auf Temperaturen von 140°C bis 200°C bei Normaldruck erhitzt. Nach Zugabe von Katalysatoren steigert man während einer Zeit von 1 bis 3 Stunden die Temperatur auf 240°C und senkt den Druck auf 10 mbar ab, während Phenol abdestilliert. Schließlich erhöht man die Temperatur auf 240°C bis 320°C und reduziert den Druck auf < 1 mbar und läßt noch 1-2 Stunden polykondensieren. Nach Beendigung der Reaktion wird die Schmelze abgekühlt und der Unterdruck aufgehoben. Das erhaltene Polycarbonat wird in üblicher Weise isoliert, beispielsweise über einen Extruder abgezogen und granuliert.

Geeignete Umesterungskatalysatoren sind die bekannten Alkali- und Erdalkali-Basen oder -Salze, die in Mengen von 5 x 10⁻⁸ Mol bis 8 x 10⁻⁷ Mol pro Mol Diphenol eingesetzt werden, wobei die Katalysatorzugabe auf einmal oder auf zwei Portionen verteilt zugegeben werden kann.

Beispiele für Katalysatoren sind Natriumhydroxid, Kaliumhydroxid, Lithiumhydroxid, Natriumcarbonat, Kaliumcarbonat, Lithiumcarbonat, Natriumacetat, Kaliumacetat, Lithiumacetat, Natriumstearat, Kaliumstearat, Natriumborhydrid, Lithiumborhydrid, Natriumphenylborat, Natriumbenzoat, Kaliumbenzoat, Lithiumbenzoat, Natriumborhydrid, Kaliumborhydrid, Lithiumborhydrid, Dinatriumhydrogenphosphat, Di-lithium, -natrium, -kalium-salze von Bisphenol A und die Lithium, Natrium-, Kaliumsalze von Phenol. Beispiele für geeignete Erdalkalimetallverbindungen sind Calciumhydroxid, Bariumhydroxid, Magnesiumhydroxid, Strontiumhydroxid, Calciumacetat, Bariumacetat, Calciumhydrogencarbonat, Magnesiumhydrogencarbonat, Calciumcarbonat, Magnesium-carbonat. Die Katalysatoren können alleine oder im Gemisch eingesetzt werden.

Setzt man die Verbindungen der Struktur (I) als Alkali oder Erdalkalisalz ein, so kann dieses Salz gegebenenfalls die Funktion des Katalysators übernehmen. Die weitere Zugabe von Katalysator erübrigt sich dann.

Zusätzlich zu den genannten Alkali- und Erdalkali-Katalysatoren können auch stickstoffhaltige basische Verbindungen zugesetzt werden, die sich bei höheren Temperaturen zersetzen oder verdampfen. Beispiele hierfür sind Tetramethylammoniumhydroxid, Tetraethylenammoniumhydroxid, Tetrabutylammoniumhydroxid, Trimethylbenzylammoniumhydroxid, Tetrabutylammoniumborhydrid und Tetrabutylammoniumtetraphenylborat. Diese stickstoffhaltigen Verbindungen werden vorzugsweise in Mengen von 1 x 10-6 - 1 x 10-1 Mol pro Mol Diphenol eingesetzt.

Darüber hinaus können auch Borsäure oder Borsäureester verwendet werden. Geeignete Borate entsprechen der Struktur

B(OR)ₙ(OH)3-n

worin
- R: für einen Alkyl oder Arylrest steht und
- n: für eine ganze Zahl von 1-3.

Beispiele hierfür sind Trimethylborat, Triethylborat, Tributylborat und Trinaphthylborat. Diese Katalysatoren werden in Mengen von 1 x 10-8 - 1 x 10-1 Mol pro Mol Diphenol eingesetzt.

Die drei genannten Katalysatoren (Metall, Amin, Borat) können alleine oder kombiniert eingesetzt werden.

Die erfindungsgemäß erhältlichen Polycarbonate beziehungsweise Polycarbonatgemische können als solche verwendet werden oder auch im Gemisch mit anderen Polycarbonaten, die keine Endgruppen der Formel (Ia) enthalten. Sie können ferner zur Herstellung von Polycarbonat-Blends verwendet werden. Bevorzugte Polcarbonat-Blends sind beispielsweise PC/ABS, PC/ASA, PC/PBT odr PC/PET-Blends. Derartige Blends sind bespielsweise in Becker, Braun, Kunststoff Handbuch Bd 3/2, Seiten 149 ff, Carl Hanser Verlag, München 1993, beschrieben.

Darüber hinaus können die erfindungsgemäß erhältlichen Polycarbonate weitere Zuschläge üblicher Art wie Verstärkungsmittel und Füllstoffe, Flammschutzmittel, Farbstoffe, Pigmente, Gleit- und Entformungsmittel, Antioxidatien oder auch weitere, nicht gebundene Lichtschutzmittel enthalten.

Die erfindungsgemäß erhältlichen Polycarbonate können zu Fasern, Folien, Platten, Spritzguß- und Extrusionsartikeln in bekannter Weise verarbeitet werden. Durch Extrusison können beispielsweise massive Platten hergestellt werden, die wie bereits erwähnt, als Verscheibungen im Hoch- und Gewächshausbau Verwendung finden. Hierfür werden bevorzugt die erfindungsgemäßen Polycarbonate mit 0,05 bis 1 Gew.-% Endgruppen der Formel (Ia) eingesetzt.

Eine Anwendung der erfindungsgemäß gegen UV-Licht stabilisierten Polycarbonate mit Endgruppen der Formel (Ia) ist weiterhin die Herstellung von mehrschichtigen Kunststofftafeln nach dem (Mehrfach-)Coextrusionsverfahren, bei dem die tragende Kernschicht, beispielsweise aus ABS, linearem oder verzweigtem Polystyrol, vorzugsweise linerarem oder verzweigtem Polycarbonat besteht und auf einer oder beiden Seiten der Kernschicht die die erfindungsgemäßen Endgruppen der Formel (Ia) enthaltenden Polycarbonate aufgebracht werden. Bevorzugt enthalten für diese Anwendung die Polycarbonate zwischen 1 Gew.-% bis 15 Gew.-% Endgruppen der Formel (Ia), vorzugsweise 5 bis 10 Gew.-%.

Die Schichtdicke der UV-Absorbtionsschicht soll zwischen 10 µ und 50 µm liegen. Auf die der Kernschicht abgewandten Seite kann eine weitere, im wesentlichen UV-Absorber-freie Deckschicht von 10 bis 30 µm aufgebracht werden.

Die erfindungsgemäß UV-geschützten Polycarbonate beziehungsweise Polycarbonatgemische zeigen durch ihre unverändert hohe Glastemperatur und Schmelzviskosität besondere verarbeitungstechnische Vorteile in der letztgenannten Anwendung (Coextrusion) gegenüber Polycarbonaten mit additiv zugesetzten UV-Absorbern, deren Glastemperatur und Schmelzviskosität durch steigenden Gehalt an UV-Absorber ungünstig beeinflußt werden kann.

Die erfindungsgemäß erhältlichen Polycarbonate mit Endgruppen der Formel (Ia) sind zudem zur Herstellung von mehrschichtigen Kunststofftafeln nach dem Coextrusionsverfahren, wobei mindestens eine der äußeren Schichten dieser Kunststofftafeln aus den erfindungsgemäßen Polycarbonaten mit Endgruppen der Formeln (Ia) besteht, einen Gehalt an Endgruppen der Formel (Ia) von 1 Gew.-% bis 15 Gew.-%, vorzugsweise von 5 Gew.-% bis 10 Gew.-% hat und eine Dicke von 10 µm bis 50 µm, vorzugsweise von 20 µm bis 40 µm hat, geeignet.

Derartige, mehrschichtige Kunststofftafeln finden ebenfalls als Verscheibungen im Hoch- und Gewächshausbau Anwendung.

### Beispiele

### A: UV-Absorbierende Ausgangsprodukte

- A1:: 2-(2'-Hydroxy-3'-tert.-butyl-5'-(2-carboxyethyl)-phenyl)-benztriazol
Fp. 195°C (Herstellung analog EP 57.160, Bsp. 1)
- A2:: 2-(2'-Hydroxy-3'-tert.-butyl-5'-(2-phenoxycarbonylethyl)-phenyl)-benztriazol
33,9 g (0,1 mol) Verbindung A1 und 21,4 g (0,1 mol) Diphenylcarbonat werden gemeinsam 4 Stunden unter Abdestillieren von Phenol auf 240°C erhitzt. Anschließend wird noch eine Stunde lang eine Vakuum von 20 mm angelegt und das verbliebene Produkt aus Cyclohexan umkristallisiert. Weiße Kristalle mit dem Fp. 110°C.
- A3:: 2-(2'-Hydroxy-3'-cyclohexyl-5'(3-carboxypropyl)-phenyl)-benztriazol

(a) 132 g (0,75 mol) 2-Cyclohexylphenol werden in 800 ml trockenem Chlorbenzol gelöst. Dann gibt man bei 5-10°C 200 g (1,5 mol) AlCl₃ hinzu und anschließend bei 0-10°C eine Lösung von 73,5 g (0,75 mol) Maleinsäureanhydrid in 400 ml Chlorbenzol. Nach 12 Stunden bei Raumtemperatur gießt man auf Eiswasser und säuert mit konz. HCl an. Man erhält 85 g eines gelben Pulvers mit dem Fp. 187-190°C.
(b) 34,5 g (0,25 mol) o-Nitroanilin werden in 300 ml Wasser und 69 ml konz. HCl verrührt. Dann tropft man bei 5°C eine Lösung von 17,3 g (0,25 mol) Natriumnitrit in 155 ml Wasser hinzu. Diese Lösung wird anschließend bei 5°C zu einer Lösung von 68,5 g (0,25 mol) der Verbindung aus Stufe A3 (a) und 79,5 g (0,75 mol) Natriumcarbonat in 11 Wasser getropft. Man erhält 117 g eines braunen Feststoffs mit dem Fp. 155°C.
(c) 42,5 g (0,1 mol) des Azofarbstoffes aus Stufe A 3 (b) werden mit 200 ml 2 n NaOH versetzt. Dann fügt man 50 g Zinkstaub hinzu und läßt innerhalb einer Stunde 80 ml 10 n NaOH zufließend, so dass die Temperatur unter 45°C bleibt. Anschließend erhitzt man vier Stunden auf 90°C, filtriert und säuert das Filtrat mit HCl an. Nach dem Umkristallisieren aus Cyclohexan resultieren 31 g 2-(2'-Hydroxy-3'-cyclohexyl-5'-(3-carboxypropyl)-phenyl)benztriazol als farblose Kristalle vom Fp. 165°C.

### B. Herstellung eines Polycarbonats

In einer 500 ml Rührapparatur mit V2A-Rührer, Stickstoffüberleitung, Kolonne und Destillationsbrücke wurden vorgelegt:

| | |
|---|---|
| 114,1 g | Bisphenol A |
| 5,12g | Verbindung A1 |
| 112,46 g | Diphenylcarbonat |
| 6,35 mg | Natriumphenolat |

Unter Stickstoff wurde das Reaktionsgemisch auf 180°C erhitzt. Innerhalb von 2 Stunden wurde die Temperatur auf 300°C gesteigert, wobei ab ca. 240°C Phenol abdestillierte. Nach 45 Minuten bei 300°C wurde allmählich ein Vakuum von <1 mbar angelegt und weitere 30 Minuten bei 310°C kondensiert.

Das entstandene Polycarbonat hat eine relative Lösungsviskosität (ηᵣₑₗ 0.5%ig in CH₂Cl₂) von 1,193. Die Gelpermeationschromatographie beweist durch Detektion bei 254 nm und 330 nm, dass die UV-lichtabsorbierende Verbindung A1 gleichmäßig als Endgruppe im Polymer eingebaut ist.

### C. Bewitterungsergebnisse

Das Polycarbonat mit UV-absorbierenden Endgruppen gemäß Beispiel B wurde unter Verwendung von Methylenchlorid als Lösungsmittel zu einer 60 µm dicken Folie verzogen und auf eine 4 mm dicke Platte aus Polycarbonat (Makrolon 1143, Bayer AG) aufgepreßt. Zum Vergleich wurde eine entsprechende Folie unter Verwendung von 5 Gew.-% Methylen-bis-((2-hydroxy-5-tert.octyl-phenyl)-2H-benztriazol) als UV-Absorber hergestellt und in gleicher Schichtdicke auf eine Polycarbonatplatte des gleichen Typs aufgepreßt.

Die Platten wurden in einem Bewitterungsgerät vom Typ Xenotest 150 bewittert:

| | | Platte mit Deckschicht aus Polycarbonat gemäß Beispiel B | Vergleich |
|---|---|---|---|
| Yellowness - Index | 0 h | 4,1 | 5,2 |
| | 352 h | 9,4 | 9,3 |
| Trübung (%) | 0 h | 2,6 | 2,7 |
| | 352 h | 15,9 | 24,8 |

Die Versuche zeigen, dass das erfindungsgemäß stabilisierte Polycarbonat im Laufe der Bewitterung deutlich weniger eintrübt als das herkömmlich stabilisierte Polycarbonat.

## Patentansprüche

1. Verfahren zur Herstellung von aromatischen Polycarbonaten mit UV-Absorberendgruppen und mit mittleren Molekulargewichten Mw (Gewichtsmittel, ermittelt durch Lichtstreuung) zwischen 1 500 und 150 000, gegebenenfalls im Gemisch mit bekannten aromatischen Polycarbonaten mit Mw (Gewichtsmittel, ermittelt durch Lichtstreuung) zwischen 1 500 und 150 000 aus Diphenolen, 0,001 bis 1 Mol, pro Mol Diphenol, Kettenabbrecher, Kohlensäurespender und gegegebenenfalls Verzweiger nach den bekannten Polycarbonatherstellungsmethoden des Phasengrenzflächenverfahrens, des Verfahrens in homogener Lösung oder des Umesterungsverfahrens in der Schmelze, **dadurch gekennzeichnet, dass** man Kettenabbrecher der Formel (I) 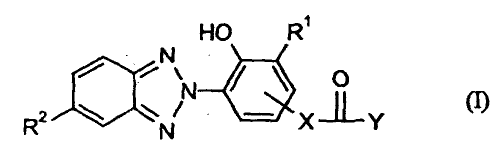 worin
R¹ H, C₁-C₁₈-Alkyl, C₃-C₆-Cycloalkyl und C₆-C₁₀-Aryl bedeutet,
R² H, Cl und C₁-C₁₂-Alkyl bedeutet,
X eine Einfachbindung, C₁-C₁₂-Alkylen, C₅-C₆-Cycloalkylen und C₆-C₁₀-Arylen bedeutet und
Y ein unter den Reaktionsbedingungen der Polycarbonatherstellungsverfahren reaktiver Rest ist,
gegebenenfalls in Kombination mit anderen bekannten Kettenabbrechern schon bei der Synthese des Polycarbonats verwendet.

## Claims

1. Process for the production of aromatic polycarbonates with UV-absorber terminal groups and with average molecular weights M_{w} (weight average, determined by light scattering) of between 1500 and 150000, optionally mixed with known aromatic polycarbonates with M_{w} (weight average, determined by light scattering) of between 1500 and 150000, from diphenols, 0.001 mol to 1 mol per mol of diphenol, chain terminators, carbonic acid donors and optionally branching agents using the known polycarbonate production methods, the phase interface process, the homogeneous solution process or the melt transesterification process, which process is **characterised in that** chain terminators of the formula (I) 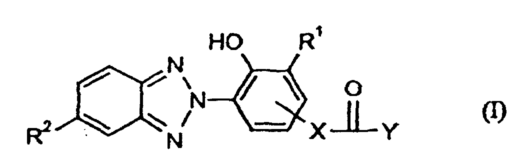 in which
R¹ means H, C₁-C₁₈ alkyl, C₃-C₆ cycloalkyl and C₆-C₁₀ aryl,
R² means H, Cl and C₁-C₁₂ alkyl,
X means a single bond, C₁-C₁₂ alkylene, C₅-C₆ cycloalkylene and C₆-C₁₀ arylene and
Y means a residue reactive under the reaction conditions of polycarbonate production,
optionally combined with other known chain terminators, are used already in the synthesis of Lhe polycarbonate.

## Revendications

1. Procédé de préparation de polycarbonates aromatiques avec radicaux absorbant les U.V. et avec un poids moléculaire moyen Mw (moyenne en poids, déterminée par diffraction de la lumière), allant de 1500 à 150 000, le cas échéant en mélange avec des polycarbonates aromatiques connus avec un poids moléculaire moyen Mw (moyenne en poids, déterminée par diffraction de la lumière), allant de 1500 à 150 000, à partir de diphénols, de 0,001 mole à 1 mole, par mole de diphénol, d'interrupteur de chaine, de dispensateur d'acide carbonique et le cas échéant, d'agent de ramification selon les procédés connus de préparation de polycarbonates par le procédé interfacial, le procédé en solution homogène ou le procédé de transestérification dans la masse fondue, **caractérisé en ce que** l'on utilise des interrupteurs de chaine de la formule (I) : 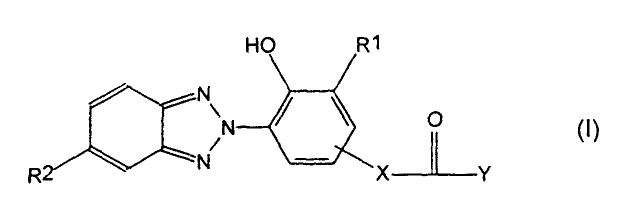 où
R¹ représente l'atome H, un radical alcoyle en C₁-C₁₈, cycloalcoyle en C₃-C₆ et aryle en C₆-C₁₀ ;
R² représente l'atome H, Cl et un radical alcoyle en C₁-C₁₂ ;
X représente une simple liaison, un radical alcoylène en C₁-C₁₂, cycloalcoylène en C₅-C₆ et arylène en C₆-C₁₀, et
Y est un reste réactif dans les conditions de réaction du procédé de préparation du polycarbonate,
le cas échéant en combinaison avec d'autres interrupteurs de chaine connus déjà pour la synthèse des polycarbonate.
